# EUROPÄISCHE PATENTSCHRIFT

(11) **EP 3 578 324 B1**
(45) Veröffentlichungstag und Bekanntmachung des Hinweises auf die Patenterteilung: **09.09.2020**
(21) Anmeldenummer: 19173862.4
(22) Anmeldetag: 10.05.2019
(51) Int. Cl.: B25J 19/06, B25J 19/02, F16P 3/14, B25J 15/00

(54) **SENSORSYSTEM MIT OPTOELEKTRONISCHEN DISTANZSENSOREN**
SENSOR SYSTEM WITH OPTOELECTRONIC DISTANCE SENSORS
SYSTÈME DE DÉTECTEURS POURVU DE DÉTECTEURS DE DISTANCE OPTOÉLECTRONIQUES

(30) Priorität: 05.06.2018 DE 102018113361
(43) Veröffentlichungstag der Anmeldung: 11.12.2019
(73) Patentinhaber: SICK AG, 79183 Waldkirch (DE)
(72) Erfinder: Hofmann, Christoph, 79183 Waldkirch (DE); Steinkemper, Heiko, 79183 Waldkirch (DE); Schott, Michael, 79183 Waldkirch (DE); Gebauer, Jens, 79183 Waldkirch (DE); Ramachandra, Sanketh, 79183 Waldkirch (DE); Weber, Benedikt, 79183 Waldkirch (DE)

(56) Entgegenhaltungen:
- WO-A1-2017/036732
- DE-A1-102013 020 596
- DE-A1-102015 112 656
- DE-A1-102015 216 659
- DE-B3-102017 105 999

## Beschreibung

Die vorliegende Erfindung betrifft ein Sensorsystem mit Distanzsensoren.

Die DE 10 2015 112 656 A1 offenbart eine Vielzahl von optoelektronischen Distanzsensoren an einem bewegbaren Maschinenteil.

Im heutigen Produktionsumfeld ergeben sich immer häufiger Aufgaben, in denen Menschen mit Robotern Hand in Hand auf engem Raum zusammenarbeiten müssen. Ein Schutz des Menschen vor dem Roboter ist hierbei nicht durch mechanische Schutzeinrichtungen wie Zäune oder Absperrungen möglich, sondern muss in die unmittelbare Umgebung des Roboters verlagert werden.

Um diese Art der Zusammenarbeit grundsätzlich möglich zu machen, haben Roboterhersteller Roboter mit einer Leistungs- und Kraftbegrenzung entwickelt. Die maximale Kraft, die ein Roboter ausüben kann, bevor die Bewegung automatisch gestoppt wird, kann hier so eingestellt werden, dass im Falle einer Kollision des Roboters mit einem Menschen eine Krafteinwirkung nicht zu ernsthaften Verletzungen führen kann. Die Motorsteuerung sowie die Drehgeber, welche eine Positionsbestimmung des Roboterarms vornehmen, sind Sicherheitskomponenten mit entsprechender Zertifizierung.

Zudem wird beim Design der mechanischen Roboterkomponenten bewusst auf kantenfreie, runde oder weiche Außenkonturen geachtet, damit eine mögliche Kollisionskraft möglichst großflächig verteilt wird, und keine Gefahr von Schnittwunden oder dergleichen auftreten kann.

Eine zunehmende Verbreitung sicherer Kleinroboter mit sicheren Bewegungssteuerungen und kraftbegrenzten Antrieben reduziert die Gefahrquellen auf den Werkzeugaufsatz am Ende des Roboterarms. Ein noch nicht zufriedenstellend gelöstes Problem hierbei ist die Absicherung des Werkzeuges und/oder des Werkstücks am Roboter an sich. Das Werkzeug selbst besteht häufig aus scharfen oder spitzen Teilen, Teilen die rotieren oder heiß sind, usw., um seine Aufgabe überhaupt ausführen zu können. Beispiele sind Bohrer, Schrauber, Fräser, Klingen, scharfkantige Greifer für filigrane Teile, Schweißzangen, Lötspitzen etc.

Am Werkzeug und/oder an einem Werkstück besteht somit eine erhöhte Verletzungsgefahr auch bei sicherer Kraftbegrenzung des Roboters aufgrund von Eigenbewegung des Werkzeugs oder scharfkantigen Teilen. Selbst stumpfes Werkzeug bzw. Werkstücke können bei einem scharfkantigen Arbeitsbereich oder Umgebungsbereich eine Gefahr darstellen. Ein Werkzeugaufsatz hat üblicherweise geringe Abmessungen und ist gut lokalisiert. Gleichzeitig stellt die große Vielfalt an möglichen Werkzeug-Geometrien, die schnelle Bewegung in vielen Freiheitsgraden und die Forderung nach schnellen Anpass- und Wechsel-Geometrien des Werkzeugaufsatzes neue Anforderungen an eine Absicherungslösung, die bestehende Sicherheitssensoren nicht oder nur unzureichend erfüllen können.

Bei Robotern handelt es sich um nicht fertige Maschinen, da sie ohne Werkzeug ausgeliefert werden. Auch inhärent sichere MRK-Roboter erhalten aus diesem Grund kein CE-Kennzeichen. Als BWS ausgeprägte Sicherheitssensoren können verwendet werden, um einen Roboter inklusive Werkzeug und Werkstück abzusichern. Diese Sensoren müssen am Roboter befestigt werden.

Die DE102015216659A1 offenbart einen Adapter, welcher es erlaubt, ein Objekt nach dem Ergreifen durch ein Greifermodul mit einem Antrieb in eine Kammer zu ziehen, welche durch eine Außenhülle gebildet wird. Die Außenhülle ist dabei eingerichtet, das Objekt zumindest teilweise abzudecken, und ausreichend groß, um das Objekt abzuschirmen. Der Adapter kann als Greiferbasissystem verstanden werden, an welchem das Greifermodul adaptiert ist. Der Antrieb zieht das gesamte Greifermodul samt Objekt in das Greiferbasissystem hinein. Der Adapter stellt ein Sicherheits-Greifersystem mit Objekteinhausung für eine sichere Mensch-Roboter-Interaktion bereit. Die Außenhülle schützt den Menschen vor durch das Greifermodul ergriffenen, scharfkantigen Objekten, welche andernfalls zu Verletzungen der im Arbeitsraum befindlichen Personen führen könnten. Dank des Adapters können daher auch scharfkantige oder spitze Objekte sicher durch den Roboter transportiert werden. Die Vorrichtung kann beispielsweise zur Anbindung von Greifermodulen an Industrieroboter, beispielsweise Delta-Roboter oder Gelenkarmroboter, eingesetzt werden.

D2 DE102017105999B3 betrifft ein Sensorsystem für einen mehrgliedrigen Roboter, umfassend mehrere an dem Roboter verteilt angeordnete Sensoren, die kommunikativ mit einer Mastereinheit verbunden sind, die zur Weiterleitung von den Sensoren gesammelter Messdaten mit einer Steuereinrichtung verbunden ist, wobei die Mastereinheit an einer Werkzeugeinheit des Roboters an die Form des Roboters angepasst positioniert ist und über ein Kabel mit der Steuereinrichtung verbunden ist.

D3 WO2017036732A1 stellt ein Sicherheitsgreifersystem mit einem Objektgehäuse zur sicheren Mensch-Roboter-Interaktion bereit. Zu diesem Zweck weist der Adapter zwei Schutzabdeckungen auf, die einen ergriffenen Gegenstand zumindest teilweise abdecken und groß genug sind, um den Gegenstand abzuschirmen. Das zugehörige Greifermodul ist in einer ersten Ausführungsform fest im Adapter eingebaut und in einer zweiten Ausführungsform mittels eines Greiferwechselaufnahmeelements flexibel austauschbar. In der geschlossenen Position schützen die Schutzabdeckungen die Personen vor scharfkantigen Gegenständen, die vom Greifermodul erfasst werden und ansonsten zu Verletzungen der im Arbeitsraum anwesenden Personen führen könnten. Dank der Vorrichtung können somit auch scharfkantige oder spitze Gegenstände sicher vom Roboter transportiert werden. Die Schutzhülle bietet weiterhin den Vorteil, dass Gegenstände, die nicht sicher vom Greifermodul gehalten werden und aus diesem herausrutschen, während sich der Roboter beispielsweise aufgrund von Fliehkräften bewegt, gefangen werden können.

Eine Aufgabe der Erfindung besteht darin, ein verbessertes Sensorsystem mit Distanzsensoren bereitzustellen.

Die Aufgabe wird gemäß Anspruch 1 gelöst durch ein Sensorsystem mit Distanzsensoren zur Überwachung eines Gefahrenbereichs an einem bewegbaren Maschinenteil mit mindestens einem Schutzbereich, wobei an dem bewegbaren Maschinenteil ein Werkzeug und/oder ein Werkstück angeordnet ist, wobei die Distanzsensoren an einem Halter an dem bewegbaren Maschinenteil angeordnet sind, wobei eine Vielzahl von Distanzsensoren angeordnet sind, wobei die Detektionsstrahlen der Distanzsensoren ein Schutzfeld bilden, wobei der Halter Aufnahmen für die Distanzsensoren aufweist, wobei an dem Halter ein erster Befestigungsadapter angeordnet ist zur Befestigung des Halters an dem bewegbaren Maschinenteil und ein zweiter Befestigungsadapter an dem Halter angeordnet ist zur Befestigung des Werkzeuges an dem Halter und zwischen den Befestigungsadaptern der Halter ein scheibenförmiges Gehäuse aufweist, wobei das scheibenförmige Gehäuse runde Oberflächen aufweist und an den Außenflächen keine Ecken aufweist.

Hier liegt ein Befestigungskonzept für BWS-Sensoren vor, das eine flexible Lösung für applikationsspezifische Anforderungen darstellt. Insbesondere ist hier durch die Befestigungsadapter eine Adapterfunktion für verschiedene Roboterflansche und Endeffektoren vorgesehen. Zudem ist das Sensorsystem mit dem scheibenförmigen Gehäuse mit der Befestigungsstruktur inhärent sicher in Form und Material, sowie mechanisch stabil um einerseits Manipulationen der Sicherheitseinrichtungen zu unterbinden und andererseits Kräfte an einen gegebenenfalls leistungs- und kraftbegrenzten Roboter weiter zu geben.

Durch die runde Oberfläche des scheibenförmigen Gehäuses ist an jeder Stelle eine mögliche Kollisionsfläche vorhanden und eben keine Kante und/oder Ecke, wodurch ein Verletzungsrisiko minimiert ist. Die Außenkonturen des scheibenförmigen Gehäuses sind dabei optional rundlich, auch kreisförmig oder bogenförmig ausgebildet.

Das dem Werker exponierte Design darf keine scharfen Kanten haben. Vielmehr ist eine organische Form vorgesehen, die bei Berührung eine geringe Flächenpressung nach sich zieht. Das dem Werker exponierte Design weist keine Spalten auf, in dem sich die Finger oder Kleidung des Werkers verfangen könnte.

Der Halter, der die Distanzsensoren aufnimmt, kann monolithisch oder modular sein.

Der Halter bzw. die Aufnahme für die Distanzsensoren sind fest mit den Befestigungsadaptern verbunden, so dass sie sich bei einem Stoß zwischen Mensch und Halter nicht von den Befestigungsadaptern löst. So können Kräfte an den Roboter weiter gegeben werden. Das mechanische Design ist so stabil ausgelegt, dass Kräfte an den Roboter und dessen Leistungs- und Kraftbegrenzung weitergegeben werden können.

Das Sensorsystem dient zum sicheren Überwachen des Gefahrenbereich bzw. eines Überwachungsbereichs des bewegbaren Maschinenteils.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen einkanaligen Aufbau mit Testung, einen zweikanaligen oder zweikanalig diversitären Aufbau einer Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Die Auswerteeinheit erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Auswerteeinheit zweikanalig ausgebildet.

Die mehreren Distanzsensoren sind mit einer Auswerteeinheit zur Auswertung der Distanzsensoren verbunden.

Die Distanzsensoren sind optional entlang einem Ring beabstandet zueinander angeordnet, wobei die Sensoren ein flächiges Schutzfeld bilden, welches sich beispielsweise zylinderförmig oder kegelstumpfförmig erstreckt.

Optional weisen die Distanzsensoren gleichmäßige Abstände auf. Durch die gleichmäßigen Abstände der Sensoren und eine jeweils identische Winkelausrichtung der Detektionsstrahlen wird eine nahezu gleichmäßige Auflösung innerhalb des Schutzfeldes erreicht.

Die Sensoren sind berührungslos wirkende abstandsmessende Distanzsensoren, wobei die Sensoren einen Detektionsstrahl zum Erfassen von Objekten im Überwachungsbereich aufweisen. Bevorzugt sind die Distanzsensoren optoelektronische Distanzsensoren.

Die Distanzsensoren können jeweils ein linienförmiges oder flächiges Schutzfeld aufweisen. Das flächige Schutzfeld ist fächerförmig ausgebildet mit einem bestimmten Öffnungswinkel von beispielsweise 2° bis 20°.

Die Überwachung erfolgt mit einer Anzahl einfacher, eindimensional tastender Distanzmesssensoren.

Beispielsweise sind die Distanzsensoren Lichtlaufzeitsensoren. Ein Lichtlaufzeitsensor bzw. ein Distanzsensor bzw. ein Lichttaster nach dem Lichtlaufzeitprinzip weist mindestens einen Lichtsender auf, der aufeinanderfolgende Lichtimpulse in einen Messbereich bzw. Überwachungsbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Als berührungslos wirkende Schutzeinrichtungen kommen neben den Distanzsensoren auch mehrere andere Sensortechnologien in Frage, nämlich Kameras, beispielsweise farbige oder monochrom arbeitende 2D Kameras oder 3D-Kameras.

Weiter sind optional Radarsensoren, Ultraschallsensoren, induktive Sensoren, kapazitive Sensoren oder ähnliche Sensoren vorgesehen.

Das Sensorsystem mit dem Befestigungskonzept kann weitere Sensoren umfassen, die zu einer Gestensteuerung benutzt werden.

Das Befestigungskonzept mit dem Halter und den Befestigungsadaptern kann mit Hilfe von Rapidprototyping-Methoden hergestellt und an individuelle Kundenwünsche angepasst werden. Möglich sind hier Verfahren der additiven Fertigung.

Ein modularer Aufbau des Halters ist ebenfalls vorgesehen. Ein Submodul des Halters enthält hierbei nur eine begrenzte Anzahl von Distanzsensoren. Durch Kombination verschiedener Submodule können so beliebige Absicherungskonturen erzeugt werden.

Zur Erzeugung eines quasi geschlossenen Schutzmantels bzw. Schutzfeldes aus den Distanzsensoren ist eine Anpassung der Sensoranzahl vorgesehen: Es kann beispielsweise die Sensoranzahl verändert werden. Je mehr Distanzsensoren angeordnet werden, desto dichter liegen die optoelektronischen Achsen der Distanzsensoren nebeneinander, wodurch das Schutzfeld eine höhere Auflösung aufweist.

Die Wellenlänge des ausgesendeten Lichts der Distanzsensoren ist vorzugsweise eine für das menschliche Auge unsichtbare Wellenlänge, beispielsweise Infrarotlicht. Dadurch wird ein gezieltes Eingreifen in mögliche Schutzlücken erschwert, da diese nicht sichtbar sind.

In Weiterbildung der Erfindung weisen die Aufnahmen des Halters für die Distanzsensoren mindestens eine mechanische Befestigung für die Distanzsensoren auf, an die die Distanzsensoren in mindestens einer vordefinierten Lage montierbar sind.

Der Halter bzw. die Aufnahme ist so realisiert sein, dass alle Distanzsensoren eine feste Relativposition zueinander haben, die kompatibel mit dem Absicherungskonzept ist.

Die Distanzsensoren werden optional per Poka Yoke eingebaut, wonach die Sensoren automatisch zwingend positionsrichtig eingebaut werden müssen.

Die Aufnahme ist optional so realisiert, dass mehrere Orientierungen der einzelnen BWS möglich sind, die jeweils kompatibel mit dem Absicherungskonzept sind.

Die Position und Ausrichtung der einzelnen BWS-Sensoren ist im final eingebauten Zustand für den Werker nicht mehr erkennbar, so dass dadurch eine Manipulation erschwert wird. Das scheibenförmige Gehäuse kann dabei geöffnet werden, ohne den Halter von dem ersten Befestigungsadapter oder dem zweiten Befestigungsadapater zu lösen. Insbesondere kann das scheibenförmige Gehäuse geöffnet werden, um die Distanzsensoren zu montieren. Danach wird das scheibenförmige Gehäuse wieder geschlossen, so dass die Distanzsensoren für den Werker nicht mehr erkennbar sind.

In Weiterbildung der Erfindung weist der Halter Aufnahmen für Leiterplatten, Elektronikbaugruppen und/oder Kabelverbindungen auf.

Der Halter kann gleichzeitig als Aufnahme für weitere Elektronikbaugruppen, wie z.B. Kabel-Sammelplatinen, Logikeinheiten zur ersten Datenverarbeitung und/oder weiterer Sensoren dienen.

Die Kabelführung ist dabei so gestaltet, dass sich der Anwender oder Werker nicht in den Kabeln verfangen kann.

Der Halter sorgt für eine Zugentlastung der Kabel der BWS-Sensoren.

In Weiterbildung der Erfindung weist das scheibenförmige Gehäuse einen Sicherheitsverschluss auf, um das scheibenförmige Gehäuse zu öffnen und zu schließen.

Das scheibenförmige Gehäuse bzw. eine Verschlusshaube wird mit einer oder wenigen Sicherheitsmechanismen verschlossen oder geöffnet, damit die Position der Distanzsensoren im Inneren des Halters nicht manipuliert werden kann.

Das scheibenförmige Gehäuse und der Halter schützen die Distanzsensoren vor einer Verschmutzung oder Frontscheibenverschmutzung bestmöglich.

In Weiterbildung der Erfindung ist das scheibenförmige Gehäuse elastisch, so dass bei Krafteinwirkungen auf die Oberfläche des Gehäuses die Gehäuseoberfläche verformbar ist. Die Verformung kann dabei temporär oder dauerhaft sein. Beispielsweise ist das scheibenförmige Gehäuse aus Schaumstoff, einem geschäumten Kunststoff oder einem anderen verformbaren Material mit einer geringen Dichte ausgebildet.

Die Außenhaut ist beispielsweise elastisch mit einem Federmechanismus und kann aus weichen Materialien mit polsternder Wirkung bestehen, so dass ein gepolstertes scheibenförmiges Gehäuse gebildet ist.

In Weiterbildung der Erfindung weist der Halter Mittel auf zum Durchschleifen oder Umführen mehrerer elektrischer, pneumatischer und/oder hydraulischer Anschlüsse.

Der Halter erlaubt das Durchschleifen oder Umführen mehrerer elektrischer oder pneumatischer Anschlüsse der Endeffektoren. Hierbei beeinflussen die Kabel zur Ansteuerung des Endeffektors die Sensorfunktion nicht, beispielswese durch Vermeidung einer Verdeckung.

In Weiterbildung der Erfindung weist der Halter eine farbige Signalanzeige auf, wobei die Signalanzeigefarben beispielsweise mindestens Grün, Gelb und Rot sind.

Das Befestigungskonzept umfasst die Signal- oder Statusanzeige, die als Interface zwischen Werker und Absicherungslösung dient.

Die Signal- oder Statusanzeige dient als Kollaborations-Interface zwischen Werker und Roboter und gibt Aufschluss über den Status der Gesamtabsicherung oder der einzeln verbauten Distanzsensoren.

Die Statusanzeige weist mindestens drei Farben auf ähnlich einem Ampelprinzip. Die Farbe Grün zeigt "alles OK" an. Die Farbe Gelb zeigt eine Warnung aufgrund bestimmter Distanz an bzw. die daraus erfolgte Verringerung der Robotergeschwindigkeit. Die Farbe Rot zeigt eine Unterschreitung des Sicherheitsabstands an, wobei der Roboter gestoppt wird.

Optional sind weitere Farben für z.B. Wartung oder Systemfehler vorgesehen. Die Statusanzeige kann eine ringförmige Ausbildung haben. Die Signalanzeige bzw. Statusanzeige kann optional auch Teile des geschützten Bereichs ausleuchten.

Die Signal- oder Statusanzeige kann optional den von den Distanzsensoren realisierten Schutzmantel bzw. das Schutzvolumina visualisieren z.B. als Lichtring auf der Arbeitsfläche.

Neben der Ampelfunktion sind optional verschiedene weitere Blinkmodi vorgesehen. Beispielsweise signalisiert beim Start des Roboters grünes Blinken, dass der Roboter sich in Bewegung setzen wird.

Bei einem automatisches Wiederanfahren nach einem Stopp signalisiert ebenfalls das grüne Blinken, dass der Roboter sich kurz darauf wieder in Bewegung setzen wird. Auch für die anderen Ausbildungen der Statusanzeige sind Blinkmodi denkbar.

In Weiterbildung der Erfindung zeigt die Signalanzeige eine Richtung einer Bewegung des Halters an. Dadurch ist für den Anwender oder Werker ersichtlich, in welche Richtung sich der Roboter bewegen wird. Dadurch ist eine Verletzungsgefahr für den Anwender minimiert.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 und Figur 2: jeweils ein Sensorsystem mit optoelektronischen Distanzsensoren an einem Roboterarm in einer schematischen Darstellung;
- Figur 3: ein Sensorsystem in einer schematischen Explosionsdarstellung;
- Figur 4: ein Sensorsystem in einer schematischen Schnittdarstellung;
- Figur 5: ein Sensorsystem mit dem zweiten Befestigungsadapter in einer schematischen Darstellung von der Unterseite bzw. der Sensorseite;
- Figur 6: ein Sensorsystem mit dem ersten Befestigungsadapter in einer schematischen Darstellung von der Oberseite;
- Figur 7: ein Sensorsystem mit dem zweiten Befestigungsadapter in einer schematischen Darstellung mit einer Kabelverbindung;
- Figur 8: ein Sensorsystem mit dem ersten Befestigungsadapter in einer schematischen Darstellung von der Oberseite mit einer Kabelverbindung;
- Figur 9: ein Sensorsystem in einer schematischen Schnittdarstellung;
- Figur 10: ein Sensorsystem in einer schematischen Explosionsdarstellung;
- Figur 11: jeweils Sensorsysteme mit verschiedenen Höhen der scheibenförmigen Gehäuse;
- Figur 12 und Figur 13: jeweils verschiedene räumliche Anordnungen von Distanzsensoren in einem Halter;

In den nachfolgenden Figuren sind identische Teile mit identischen Bezugszeichen versehen.

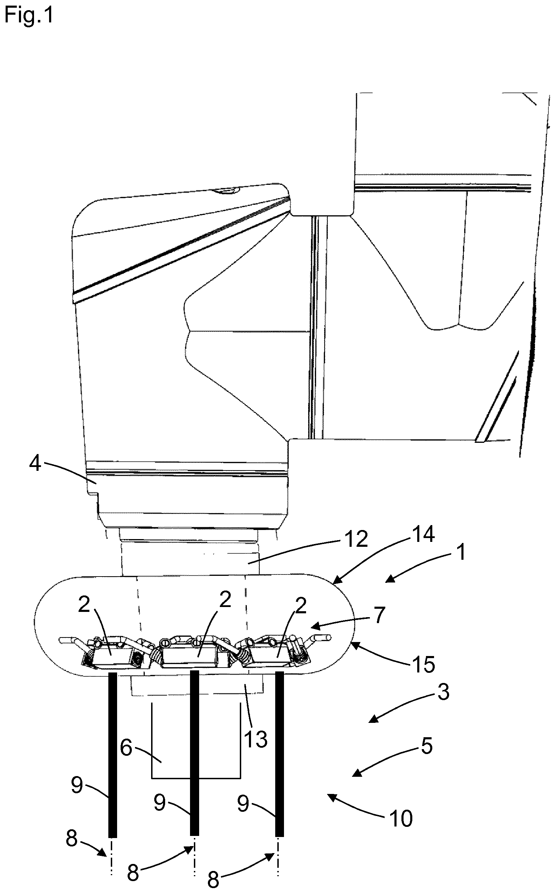

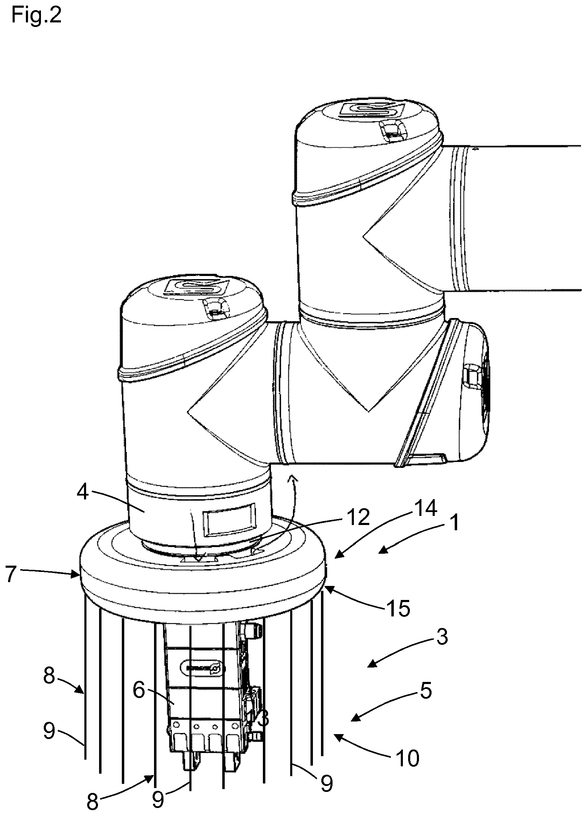

Figur 1 und Figur 2 zeigen jeweils ein Sensorsystem 1 mit Distanzsensoren 2 zur Überwachung eines Gefahrenbereichs 3 an einem bewegbaren Maschinenteil 4 mit mindestens einem Schutzbereich 5, wobei an dem bewegbaren Maschinenteil ein Werkzeug 6 und/oder ein Werkstück angeordnet ist, wobei die Distanzsensoren 2 an einem Halter 7 an dem bewegbaren Maschinenteil 4 angeordnet sind, wobei eine Vielzahl von Distanzsensoren 2 angeordnet sind, wobei die Detektionsstrahlen 9 der Distanzsensoren 2 ein Schutzfeld 10 bilden, wobei der Halter 7 Aufnahmen für die Distanzsensoren 2 aufweist, wobei an dem Halter 7 ein erster Befestigungsadapter 12 angeordnet ist zur Befestigung des Halters 7 an dem bewegbaren Maschinenteil 4 und ein zweiter Befestigungsadapter 13 an dem Halter angeordnet ist zur Befestigung des Werkzeuges 6 an dem Halter 7 und zwischen den Befestigungsadaptern 12 und 13 der Halter 7 ein scheibenförmiges Gehäuse 14 aufweist, wobei das scheibenförmige Gehäuse 14 eine runde Oberfläche 15 aufweist und an den Außenflächen bzw. den Seitenflächen keine Ecken aufweist.

Bei den Distanzsensoren kann es sich um optoelektronische Distanzsensoren handeln.

Insbesondere ist hier durch die Befestigungsadapter 12 und 13 eine Adapterfunktion für verschiedene Roboterflansche und Endeffektoren vorgesehen. Zudem ist das Sensorsystem 1 mit dem scheibenförmigen Gehäuse 14 mit der Befestigungsstruktur inhärent sicher in Form und Material, sowie mechanisch stabil um einerseits Manipulationen des Sensorsystems bzw. der Sicherheitseinrichtungen zu unterbinden und andererseits Kräfte an einen gegebenenfalls leistungs- und kraftbegrenzten Roboter weiterzugeben.

Gemäß Figur 2 ist durch die runde Oberfläche 15 des scheibenförmigen Gehäuses 14 an jeder Stelle eine mögliche Kollisionsfläche vorhanden und eben keine Kante oder Ecke, wodurch ein Verletzungsrisiko minimiert ist. Die Außenkonturen des scheibenförmigen Gehäuses 14 sind dabei optional rundlich, auch kreisförmig oder bogenförmig ausgebildet.

Gemäß Figur 2 ist eine organische Form vorgesehen, die bei Berührung eine geringe Flächenpressung nach sich zieht. Das dem Werker exponierte Design weist keine Spalten auf, in dem sich die Finger oder Kleidung des Werkers verfangen könnte.

Der Halter 7, der die Distanzsensoren 2 aufnimmt, kann monolithisch oder modular sein.

Der Halter 7 bzw. die Aufnahme für die Distanzsensoren 2 sind fest mit den Befestigungsadaptern 12 und 13 verbunden, so dass sie sich bei einem Stoß zwischen Mensch und Halter 2 nicht von den Befestigungsadaptern 12 und 13 lösen. So können Kräfte an den Roboter weitergegeben werden. Das mechanische Design ist so stabil ausgelegt, dass Kräfte an den Roboter und dessen Leistungs- und Kraftbegrenzung weitergegeben werden können.

Das Sensorsystem 1 dient zum sicheren Überwachen des Gefahrenbereichs 3 bzw. eines Überwachungsbereichs des bewegbaren Maschinenteils mittels des Schutzfeldes 10.

Die Auswerteeinheit erkennt Schutzfeldverletzungen und kann ein sicherheitsgerichtetes Abschaltsignal ausgeben, um eine gefahrbringende Bewegung des bewegbaren Maschinenteils 4 bzw. den Roboter zu stoppen bzw. das Maschinenteil 4 oder den Roboter abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Die mehreren Distanzsensoren 2 sind mit einer Auswerteeinheit zur Auswertung der Distanzsensoren 2 verbunden.

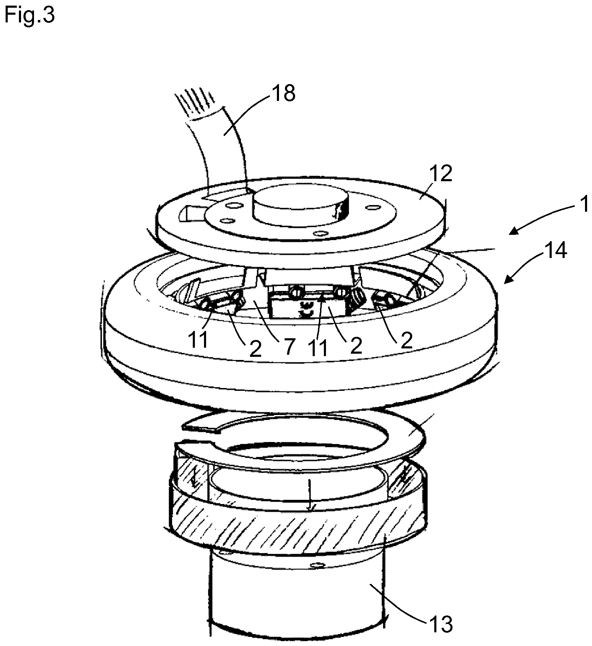

Die Distanzsensoren 2 sind gemäß Figur 3 entlang einem Ring beabstandet zueinander angeordnet, wobei die Detektionsstrahlen der Distanzsensoren 2 ein flächiges bzw. räumliches Schutzfeld bilden, welches sich beispielsweise zylinderförmig gemäß den Figuren 1 oder 2 oder beispielsweise kegelstumpfförmig erstreckt.

Die Sensoren 2 sind berührungslos wirkende abstandsmessende Distanzsensoren 2, wobei die Sensoren gemäß Figur 1 und Figur 2 einen Detektionsstrahl 9 zum Erfassen von Objekten im Überwachungsbereich aufweisen.

Die Überwachung erfolgt beispielsweise mit einer Anzahl einfacher, eindimensional tastender Distanzmesssensoren 2.

Gemäß Figur 3 sind die Distanzsensoren 2 Lichtlaufzeitsensoren.

Gemäß Figur 3 ist ein modularer Aufbau der Halters 7 vorgesehen. Ein Submodul des Halters 7 enthält hierbei nur eine begrenzte Anzahl von Distanzsensoren 2. Durch Kombination verschiedener Submodule können so beliebige Absicherungskonturen erzeugt werden.

Zur Erzeugung eines quasi geschlossenen Schutzmantels bzw. Schutzfeldes 10 aus den Distanzsensoren 2 ist gemäß Figur 1 und Figur 2 eine Anpassung der Sensoranzahl vorgesehen: Es kann beispielsweise die Sensoranzahl verändert werden. Je mehr Distanzsensoren 2 angeordnet werden, desto dichter liegen die optoelektronischen Achsen 8 der Distanzsensoren 2 nebeneinander, wodurch das Schutzfeld 10 eine höhere Auflösung aufweist.

Gemäß Figur 3 weisen die Aufnahmen 11 des Halters 7 für die Distanzsensoren 2 mindestens eine mechanische Befestigung für die Distanzsensoren 2 auf, an die die Distanzsensoren 2 in mindestens einer vordefinierten Lage montierbar sind.

Der Halter 7 bzw. die Aufnahme ist so realisiert, dass alle Distanzsensoren 2 eine feste Relativposition zueinander haben, die kompatibel mit dem Absicherungskonzept ist.

Die Distanzsensoren 2 werden gemäß Figur 3 per Poka Yoke Richtlinien eingebaut, wonach die Sensoren 2 automatisch zwingend positionsrichtig eingebaut werden müssen.

Gemäß Figur 3 weist der Halter 7 Mittel auf zum Durchschleifen oder Umführen mehrerer elektrischer, pneumatischer und/oder hydraulischer Anschlüsse. Figur 3 zeigt beispielhaft eine Kabelverbindung 18.

Der Halter 7 erlaubt das Durchschleifen oder Umführen mehrerer elektrischer oder pneumatischer Anschlüsse der Endeffektoren. Hierbei beeinflussen die Kabel bzw. die Kabelverbindung 18 zur Ansteuerung des Endeffektors die Sensorfunktion nicht, beispielsweise durch Vermeidung einer Verdeckung der Distanzsensoren.

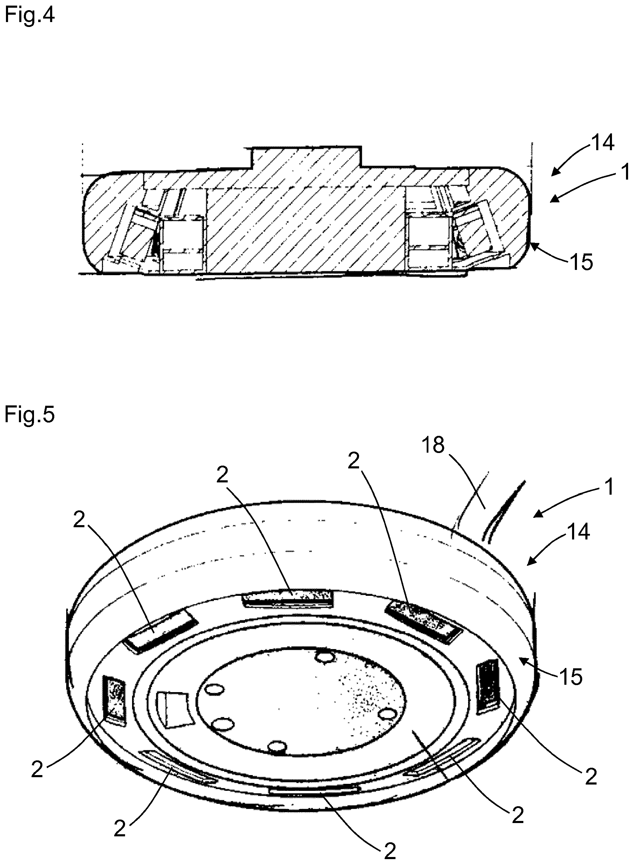

Gemäß Figur 4 ist das scheibenförmige Gehäuse 14 elastisch, so dass bei Krafteinwirkungen auf die Oberfläche 15 des Gehäuses 14 die Gehäuseoberfläche verformbar ist.

Die Außenhaut ist elastisch mit einem Federmechanismus und kann aus weichen Materialien mit polsternder Wirkung bestehen.

Gemäß Figur 5 weisen die Distanzsensoren 2 gleichmäßige Abstände auf. Durch die gleichmäßigen Abstände der Sensoren 2 und eine jeweils identische Winkelausrichtung der Detektionsstrahlen wird eine nahezu gleichmäßige Auflösung innerhalb des Schutzfeldes erreicht.

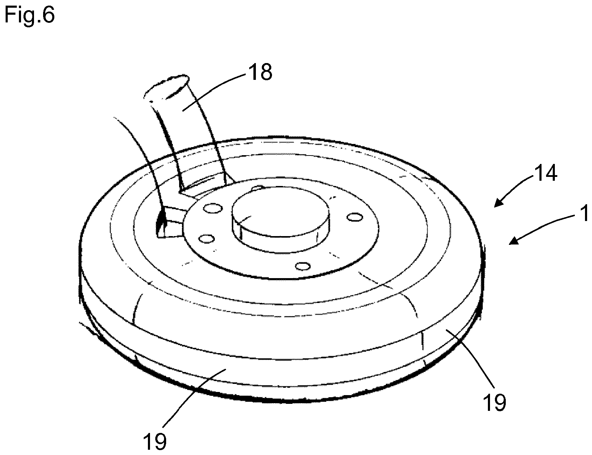

Gemäß Figur 6 weist der Halter eine farbige Signalanzeige 19 auf, wobei die Signalanzeigefarben mindestens Grün, Gelb und Rot sind.

Das Befestigungskonzept umfasst die Signal- oder Statusanzeige 19, die als Interface zwischen Werker und Absicherungslösung dient.

Die Signal- oder Statusanzeige 19 dient als Kollaborations-Interface zwischen Werker und Roboter und gibt Aufschluss über den Status der Gesamtabsicherung oder der einzeln verbauten Distanzsensoren 2.

Die Signal- oder Statusanzeige 19 weist mindestens drei Farben auf ähnlich einem Ampelprinzip. Die Farbe Grün zeigt "alles OK" an. Die Farbe Gelb zeigt eine Warnung aufgrund bestimmter Distanz an bzw. die daraus erfolgte Verringerung der Robotergeschwindigkeit. Die Farbe Rot zeigt eine Unterschreitung des Sicherheitsabstands an, wobei der Roboter gestoppt wird.

Optional sind weitere Farben für z.B. Wartung oder Systemfehler vorgesehen. Die Signal- oder Statusanzeige 19 kann gemäß Figur 6 eine ringförmige Ausbildung haben. Die Signalanzeige 19 bzw. Statusanzeige kann optional auch Teile des geschützten Bereichs ausleuchten.

Die Signal- oder Statusanzeige 19 kann optional den von den Distanzsensoren 2 realisierten Schutzmantel bzw. das Schutzvolumina visualisieren z.B. als Lichtring auf der Arbeitsfläche.

Neben der Ampelfunktion sind optional verschiedene weitere Blinkmodi vorgesehen. Beispielsweise signalisiert beim Start des Roboters grünes Blinken, dass der Roboter sich in Bewegung setzen wird.

Bei einem automatisches Wiederanfahren nach einem Stopp signalisiert ebenfalls das grüne Blinken, dass der Roboter sich kurz darauf wieder in Bewegung setzen wird. Auch für die anderen Ausbildungen der Signal- oder Statusanzeige 19 sind Blinkmodi denkbar.

Gemäß Figur 6 der Erfindung kann die Signalanzeige 19 eine Richtung einer Bewegung des Halters anzeigen. Dadurch ist für den Anwender oder Werker sichtbar, in welche Richtung sich der Roboter bewegen wird. Dadurch ist eine Verletzungsgefahr für den Anwender minimiert.

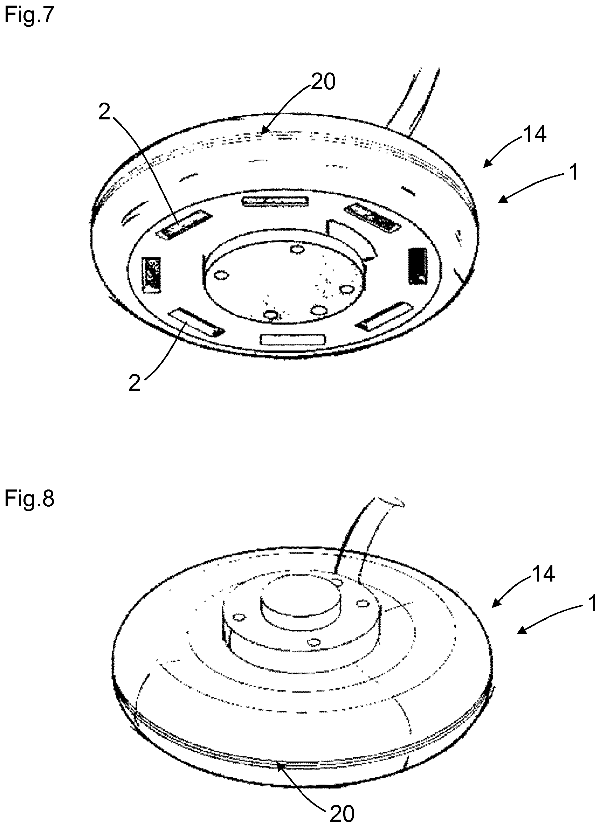

Gemäß Figur 7 und Figur 8 weist das scheibenförmige Gehäuse 14 einen Sicherheitsverschluss 20 auf, um das scheibenförmige Gehäuse zu öffnen oder zu schließen.

Das scheibenförmige Gehäuse 14 bzw. eine Verschlusshaube wird mit einer oder wenigen Sicherheitsmechanismen verschlossen oder geöffnet, damit die Position der Distanzsensoren 2 im Inneren des Halters nicht manipuliert werden kann.

Das scheibenförmige Gehäuse 14 und der Halter schützen die Distanzsensoren 2 vor einer Verschmutzung oder Frontscheibenverschmutzung bestmöglich.

Die Position und Ausrichtung der einzelnen Distanzsensoren 2 ist im final eingebauten Zustand für den Werker nicht mehr erkennbar, so dass dadurch eine Manipulation erschwert wird.

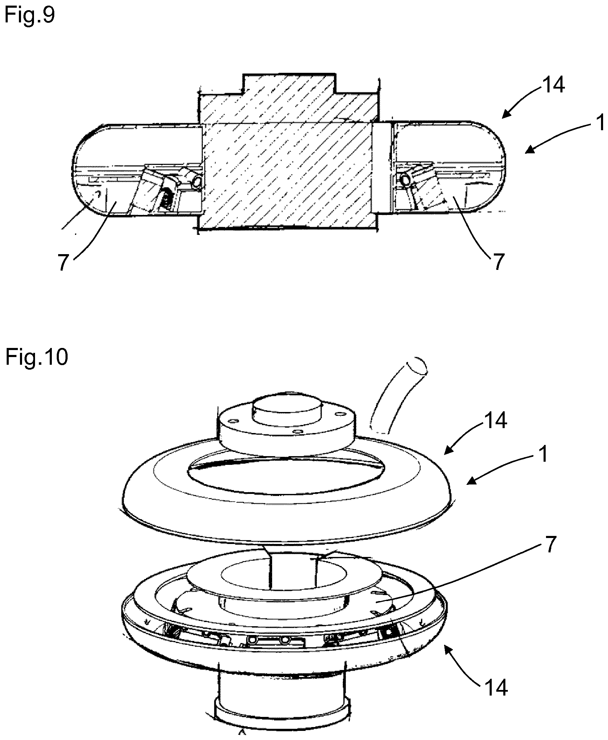

Gemäß Figur 9 und 10 weist der Halter 7 Aufnahmen für Leiterplatten, Elektronikbaugruppen und/oder Kabelverbindungen auf.

Der Halter 7 kann gleichzeitig als Aufnahme für weitere Elektronikbaugruppen, wie z.B. Kabel-Sammelplatinen, Logikeinheiten zur ersten Datenverarbeitung und/oder weiterer Sensoren dienen.

Die Kabelführung ist dabei so gestaltet, dass sich der Anwender oder Werker nicht in den Kabeln verfangen kann.

Der Halter 7 sorgt für eine Zugentlastung der Kabel der Distanzsensoren.

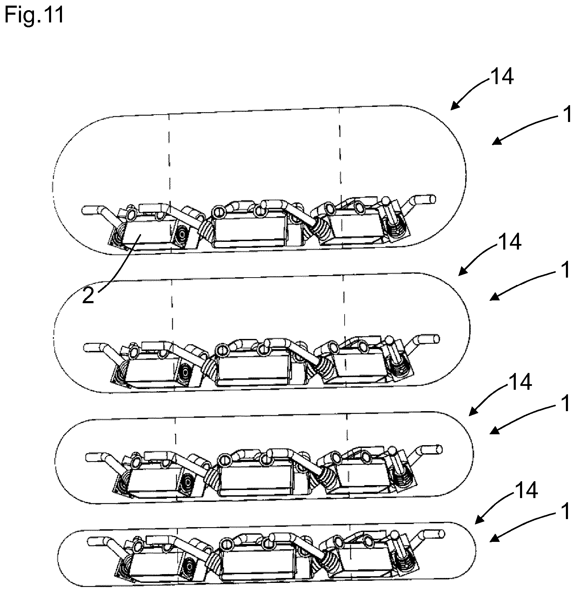

Gemäß Figur 11 sind schematisch Sensorsysteme 1 mit verschiedenen Höhen bzw. verschiedenen Abmessungen dargestellt, die je nach den Platzerfordernissen der Anwendung eingesetzt werden können. Beispielsweise sind von oben nach unten Höhen von 50 mm, 40 mm, 30 mm und 20 mm dargestellt.

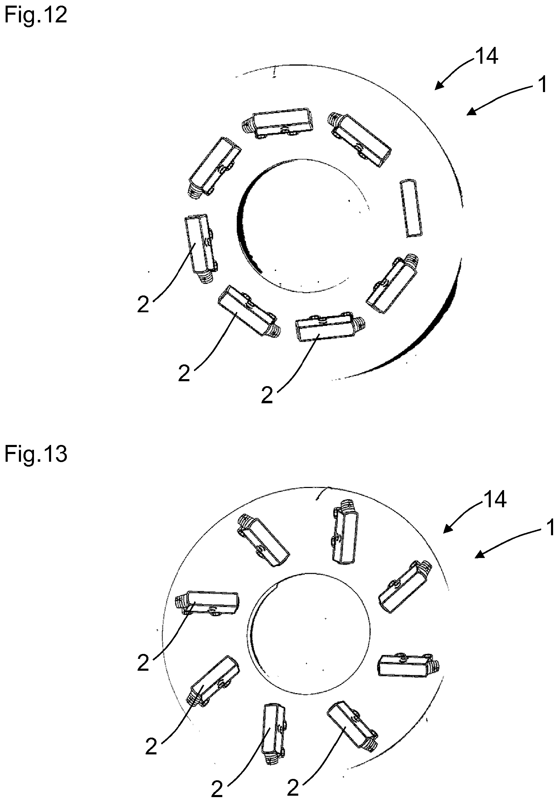

Die Aufnahme ist gemäß Figur 12 und 13 so realisiert, dass mehrere Orientierungen der einzelnen Distanzsensoren möglich sind, die jeweils kompatibel mit dem Absicherungskonzept sind.

### Bezugszeichen:

1 Sensorsystem
2 optoelektronische Distanzsensoren
3 Gefahrenbereich
4 bewegbares Maschinenteil
5 Schutzbereich
6 Werkzeug
7 Halter
8 optoelektronischen Achsen
9 Detektionsstrahlen
10 Schutzfeld
11 Aufnahmen
12 erster Befestigungsadapter
13 zweiter Befestigungsadapter
14 scheibenförmiges Gehäuse
15 runde Oberfläche
16 Leiterplatte
17 Elektronikbaugruppe
18 Kabelverbindung
19 Signalanzeige

## Patentansprüche

1. Sensorsystem (1) umfassend einen Halter (7) und Distanzsensoren (2) zur Überwachung eines Gefahrenbereichs (3) an einem bewegbaren Maschinenteil (4) mit mindestens einem Schutzbereich (5), wobei an dem bewegbaren Maschinenteil (4) ein Werkzeug (6) und/oder ein Werkstück mittels des Halters (7) anordenbar ist,
wobei die Distanzsensoren (2) am Halter (7) angeordnet sind, und mittels des Halters (7) an dem bewegbaren Maschinenteil (4) anordenbar sind,
wobei eine Vielzahl von Distanzsensoren (2) angeordnet sind, wobei die Detektionsstrahlen (9) der Distanzsensoren (2) ein Schutzfeld (10) bilden,
wobei der Halter (7) Aufnahmen (11) für die Distanzsensoren (2) aufweist, wobei an dem Halter (7) ein erster Befestigungsadapter (12) angeordnet ist zur Befestigung des Halters (7) an dem bewegbaren Maschinenteil (4) und ein zweiter Befestigungsadapter (13) an dem Halter (7) angeordnet ist zur Befestigung des Werkzeuges (6) und/oder des Werkstücks an dem Halter (7) und zwischen den Befestigungsadaptern (12, 13) der Halter (7) ein scheibenförmiges Gehäuse (14) aufweist, wobei das scheibenförmige Gehäuse (14) runde Oberflächen (15) aufweist und an den Außenflächen keine Ecken aufweist, **dadurch gekennzeichnet, dass** der Halter (7) eine farbige Signalanzeige (19) aufweist, wobei die Signalanzeige (19) eine Richtung einer Bewegung des Halters (7) anzeigt.

2. Sensorsystem nach Anspruch 1, **dadurch gekennzeichnet, dass** die Aufnahmen (11) des Halters (7) für die Distanzsensoren (2) mindestens eine mechanische Befestigung für die Distanzsensoren (2) aufweisen, an die die Distanzsensoren (2) in mindestens einer vordefinierten Lage montierbar sind.

3. Sensorsystem nach mindestens einem der vorhergehenden Ansprüche, **dadurch gekennzeichnet, dass** der Halter (7) Aufnahmen für Leiterplatten, Elektronikbaugruppen und/oder Kabelverbindungen (18) aufweist.

4. Sensorsystem nach mindestens einem der vorhergehenden Ansprüche, **dadurch gekennzeichnet, dass** das scheibenförmige Gehäuse (14) einen Sicherheitsverschluss (20) aufweist, um das scheibenförmige Gehäuse (14) zu öffnen und zu schließen.

5. Sensorsystem nach mindestens einem der vorhergehenden Ansprüche, **dadurch gekennzeichnet, dass** die Oberfläche des scheibenförmiges Gehäuse (14) teilweise elastisch ist, so dass bei Krafteinwirkungen auf die Oberfläche des Gehäuses (14) die Gehäuseoberfläche verformbar ist.

6. Sensorsystem nach mindestens einem der vorhergehenden Ansprüche, **dadurch gekennzeichnet, dass** der Halter (7) Mittel aufweist zum Durchschleifen oder Umführen mehrerer elektrischer, pneumatischer und/oder hydraulischer Anschlüsse.

7. Sensorsystem nach Anspruch 1, **dadurch gekennzeichnet, dass** die Signalanzeigefarben der farbigen Signalanzeige (19) mindestens Grün, Gelb und Rot sind.

## Claims

1. A sensor system (1) comprising a holder (7) and distance sensors (2) for monitoring a hazard zone (3) at a movable machine part (4) having at least one protected zone (5), wherein a tool (6) and/or a workpiece can be arranged at the movable machine part (4) by means of the holder (7), wherein the distance sensors (2) are arranged at the holder (7) and can be arranged at the movable machine part (4) by means of the holder (7), wherein a plurality of distance sensors (2) are arranged, wherein the detection beams (9) of the distance sensors (2) form a protected field (10), wherein the holder (7) has mounts (11) for the distance sensors (2), wherein a first fastening adapter (12) for fastening the holder (7) to the movable machine part (4) is arranged at the holder (7) and a second fastening adapter (13) for fastening the tool (6) and/or the workpiece to the holder (7) is arranged at the holder (7), and wherein the holder (7) has a disk-shaped housing (14) between the fastening adapters (12, 13), wherein the disk-shaped housing (14) has round surfaces (15) and has no corners at the outer surfaces, **characterized in that** the holder (7) has a color signal display (19), with the signal display (19) indicating a direction of a movement of the holder (7).

2. A sensor system in accordance with claim 1, **characterized in that** the mounts (11) of the holder (7) for the distance sensors (2) have at least one mechanical fastening for the distance sensors (2) at which the distance sensors (2) can be mounted in at least one predefined position.

3. A sensor system in accordance with at least one of the preceding claims, **characterized in that** the holder (7) has mounts for circuit boards, electronic assemblies and/or cable connections (18).

4. A sensor system in accordance with at least one of the preceding claims, **characterized in that** the disk-shaped housing (14) has a safety closure (20) to open and close the disk-shaped housing (14).

5. A sensor system in accordance with at least one of the preceding claims, **characterized in that** the surface of the disk-shaped housing (14) is partly resilient so that the housing surface is deformable on exertions of force onto the surface of the housing (14).

6. A sensor system in accordance with at least one of the preceding claims, **characterized in that** the holder (7) has means for looping through or guiding round a plurality of electrical, pneumatic and/or hydraulic connectors.

7. A sensor system in accordance with claim 1, **characterized in that** the signal display colors of the color signal display (19) are at least green, yellow, and red.

## Revendications

1. Système capteur (1) comportant un support (7) et des capteurs de distance (2) pour la surveillance d'une zone de danger (3) au niveau d'une partie de machine mobile (4) présentant au moins une zone de protection (5), un outil (6) et/ou une pièce à œuvrer pouvant être disposé(e) sur la partie de machine mobile (4) à l'aide dudit support (7),
dans lequel
les capteurs de distance (2) sont disposés sur le support (7) et peuvent être disposés sur la partie de machine mobile (4) à l'aide dudit support (7),
il est prévu une multitude de capteurs de distance (2),
les rayons de détection (9) des capteurs de distance (2) forment un champ de protection (10),
le support (7) présente des logements (11) pour les capteurs de distance (2),
un premier adaptateur de fixation (12) est disposé sur le support (7) pour fixer le support (7) à la partie de machine mobile (4) et un deuxième adaptateur de fixation (13) est disposé sur le support (7) pour fixer l'outil (6) et/ou la pièce à œuvrer au support (7), et
le support (7) comprend un boîtier en forme de disque (14) entre les adaptateurs de fixation (12, 13),
le boîtier en forme de disque (14) présente des surfaces rondes (15) et n'a pas de coins sur les surfaces extérieures,
**caractérisé en ce que**
le support (7) présente un affichage de signal de couleur (19), l'affichage de signal (19) indiquant une direction d'un mouvement du support (7).

2. Système capteur selon la revendication 1,
**caractérisé en ce que**
les logements (11) du support (7) pour les capteurs de distance (2) présentent au moins une fixation mécanique pour les capteurs de distance (2), sur laquelle les capteurs de distance (2) peuvent être montés dans au moins une position prédéfinie.

3. Système capteur selon l'une au moins des revendications précédentes,
**caractérisé en ce que**
le support (7) présente des logements pour des cartes à circuit, des ensembles électroniques et/ou des connexions de câbles (18).

4. Système capteur selon l'une au moins des revendications précédentes,
**caractérisé en ce que**
le boîtier en forme de disque (14) présente une fermeture de sécurité (20) pour ouvrir et fermer le boîtier en forme de disque (14).

5. Système capteur selon l'une au moins des revendications précédentes,
**caractérisé en ce que**
la surface du boîtier en forme de disque (14) est partiellement élastique, de sorte que la surface du boîtier est déformable lorsqu'une force est appliquée sur la surface du boîtier (14).

6. Système capteur selon l'une au moins des revendications précédentes,
**caractérisé en ce que**
le support (7) comporte des moyens permettant de mettre en boucle ou détourner plusieurs raccords électriques, pneumatiques et/ou hydrauliques.

7. Système capteur selon la revendication 1,
**caractérisé en ce que**
les couleurs de l'affichage de signal de couleur (19) sont au moins le vert, le jaune et le rouge.
